# EUROPÄISCHE PATENTANMELDUNG

(11) **EP 1 283 408 A2**
(43) Veröffentlichungstag der Anmeldung: **12.02.2003**
(21) Anmeldenummer: 02016724.3
(22) Anmeldetag: 26.07.2002
(51) Int. Cl.: G01C 22/02

(54) **Verfahren zum Abspeichern von Kilometerstandsdaten**

(30) Priorität: 07.08.2001 DE 10138703
(71) Anmelder: DaimlerChrysler AG, 70567 Stuttgart (DE)
(72) Erfinder: Ohle, Jörn-Marten, 71229 Leonberg (DE); Rahm, Martin, 70563 Stuttgart (DE); Unseld, Eckard, 70176 Stuttgart (DE)

(57) **Zusammenfassung**

Die Erfindung betrifft ein Verfahren zum Speichern von Kilometerstandsdaten in einem Verkehrsmittel mit über einen Datenbus verbundenen Steuergeräten, wobei die mittels eines Wegstreckenzählers aktuell ermittelten Kilometerstandsdaten in einem Speichermittel eines ersten Steuergeräts abgespeichert werden. Ziel ist es ein alternatives Verfahren zur manipulationssicheren Speicherung von Kilometerstandsdaten bereitzustellen. Dabei wird insbesondere die Fehlersicherheit bei der Übertragung der Kilometerstandsdaten verbessert. Danach werden die aktuellen Kilometerstandsdaten von mindestens einem weiteren Steuergerät auf dem Datenbus in einem Speichermittel abgespeichert, die Steuergeräte senden die aktuell abgespeicherten Kilometerstandsdaten in bestimmten Zeitintervallen auf den Datenbus und ein Steuergerät übernimmt den auf den Datenbus gesendeten Kilometerstand, wenn dieser betragsmäßig höher, bezogen auf seinen abgespeicherten Wert, ist und verwendet diesen für die weitere Zählung sowie Speicherung in diesem Steuergerät.

## Beschreibung

Die Erfindung betrifft ein Verfahren zur manipulationssicheren Abspeicherung des Kilometerstandes in einem Verkehrsmittel.

Der manipulationssicheren Speicherung einer vom Verkehrsmittel zurückgelegten Wegstrecke kommt eine große Bedeutung zu. So sind in neuerer Zeit Versicherungen bestrebt ihre Tarife für Fahrzeuge von der jährlich zurückgelegten Wegstrecke abhängig zu machen. Zudem ist der Kilometerstand beim Kauf oder Verkauf eines Gebrauchtwagens ein ausschlaggebender Faktor für die Preisgestaltung.

In der US 4710888 ist ein Verfahren zur Messung, Anzeige und Speicherung der von einem Verkehrsmittel zurückgelegten Wegstrecke offenbart, bei dem die akkumulierten und aktualisierten Kilometerstandsdaten in einem nichtflüchtigen Speicher abgelegt werden. Ein Schwerpunkt des Verfahrens liegt in einer optimierten Adressierung zur Speicherung der akkumulierten Kilometerstandsdaten im nichtflüchtigen Speicher, um unnötige Schreib-/Löschzugriffe auf den nichtflüchtigen Speicher zu vermeiden. Zudem ermöglicht das Verfahren, das beim Schreiben auf den nichtflüchtigen Speicher eingesetzt wird, eine Fehlerüberprüfung durch Setzen und Vergleich eines zusätzlichen Paritätsbits zu jedem abgespeicherten Datenwert.

In der US 4803707 ist eine Schaltung zur digitalen Speicherung von Kilometerstandsdaten offenbart, die die Lebensdauer vom nichtflüchtigen Speicher erhöhen soll. Hierbei wird der signifikante digitale Wert eines Kilometerstandes als Adresszeiger für den nichtflüchtigen Speicher gesetzt, in dem dann der nicht signifikante digitale Wert des Kilometerstands gespeichert wird. Zudem wird die elektronische Manipulation von Kilometerstandsdaten verhindert, indem ein zusätzliches Flag beim Schreiben gesetzt wird, welches nicht gelöscht werden kann und zusätzlich überprüft wird.

In der DE 19821696 ist ein Verfahren und eine Vorrichtung zur manipulationssicheren Speicherung von Kilometerstandsdaten eines Fahrzeugs offenbart. Hierbei werden die von einer Zähleinheit ermittelten Daten verschlüsselt zu einer Empfangseinheit übertragen. In der Empfangseinheit werden die Daten entschlüsselt und gespeichert.

Aus der JP 06241825 A ist ein elektronischer Kilometerzähler bekannt, bei dem der jeweilige Kilometerstand in einem nichtflüchtigen Speicher und außerdem in einem Prozessor- und Anzeige-Teil abgespeichert wird. Um einen Missbrauch zu verhindern, wird bei einer Manipulation des nichtflüchtigen Speichers beim Start des Prozessor-Teils die dort gehaltene Kilometerstands-Information in den nichtflüchtigen Speicher zurückgeschrieben.

Die Aufgabe der vorliegenden Erfindung ist es, ein alternatives Verfahren zur manipulationssicheren Speicherung von Kilometerstandsdaten bereitzustellen. Dabei wird insbesondere die Fehlersicherheit bei der Übertragung der Kilometerstandsdaten verbessert.

Die Aufgabe wird erfindungsgemäß durch die Merkmale des Anspruchs 1 gelöst. Danach werden die aktuellen Kilometerstandsdaten von mindestens einem weiteren Steuergerät auf dem Datenbus in einem Speichermittel abgespeichert. Die Steuergeräte senden die aktuell abgespeicherten Kilometerstandsdaten in bestimmten Zeitintervallen auf den Datenbus. Ein Steuergerät übernimmt den auf den Datenbus gesendeten Kilometerstand nur dann, wenn dieser betragsmäßig höher bezogen auf seinen abgespeicherten Wert ist. Dieser Wert wird von dem Steuergerät für die weitere Zählung sowie Speicherung verwendet.

Durch die redundante Speicherung der Kilometerstandsdaten in den weiteren Steuergeräten wird die Manipulationssicherheit erhöht. Eine mögliche Manipulation müsste nun nicht mehr nur in dem ersten Steuergerät, sondern ebenso in den weiteren Steuergeräten durchgeführt werden.

Da eine Manipulation der Kilometerstandsdaten im Allgemeinen eine Reduktion der Kilometerstandsdaten zum Ziel hat, wird durch das Verfahren sichergestellt, dass immer der betragsmäßig höchste auf dem Datenbus gesendete Kilometerstand von den Speichermitteln der Steuergeräte abgespeichert wird. Damit wird im Falle der Manipulation der Kilometerstandsdaten an einem der Steuergeräte verhindert, dass sich diese Manipulation auf die weiteren Steuergeräte ausbreiten kann.

Zudem muss der Kilometerstand beim Tausch eines Steuergeräts nicht neu eingestellt werden. Der korrekte Wert wird von dem neuen Steuergerät, bei Anwendung dieses Verfahrens, automatisch übernommen.

Bei einer Weiterbildung des erfindungsgemäßen Verfahrens wird vor der Übernahme der Kilometerstandsdaten durch ein Steuergerät eine Prüfung auf Fehler der auf dem Datenbus übertragenen Kilometerstandsdaten durchgeführt wird.

Dieser Schritt ist notwendig, da verschiedene Fehlerquellen existieren. Beispielsweise durch das fehlerhafte Verhalten eines Controllers oder durch einen Software- oder Hardwarefehler eines Steuergeräts können fehlerhafte Daten auf den Datenbus gelangen, die als Kilometerstandsdaten interpretiert werden könnten. Dies würde dazu führen, dass ein einmaliger Fehler auf dem Datenbussystem das Verkehrsmittel um eine beliebige Anzahl von Kilometern "altern" würde. Zudem könnten die Kilometerstandsdaten auf dem Datenbus auch mit Absicht manipuliert werden, da ja das Datenformat der zu sendenden Daten bekannt ist.

Die Übernahme eines höheren Kilometerstands durch ein Steuergerät ist von großer Bedeutung, da dieser Wert für die weitere Zählung verwendet wird. Wegen der möglich auftretenden Fehler muss sichergestellt werden, dass nur korrekte Kilometerstandsdaten von den Steuergeräten übernommen werden. Dies wird durch eine Prüfung der Kilometerstandsdaten vor der Übernahme durch das Steuergerät erreicht.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. Es sollen auch die vorteilhaften Ausgestaltungen einbezogen sein, die sich aus einer beliebigen Kombination der Unteransprüche ergeben. In der Zeichnung ist eine Ausführungsform des erfindungsgemäßen dargestellt. Es zeigt in schematischer Darstellung,

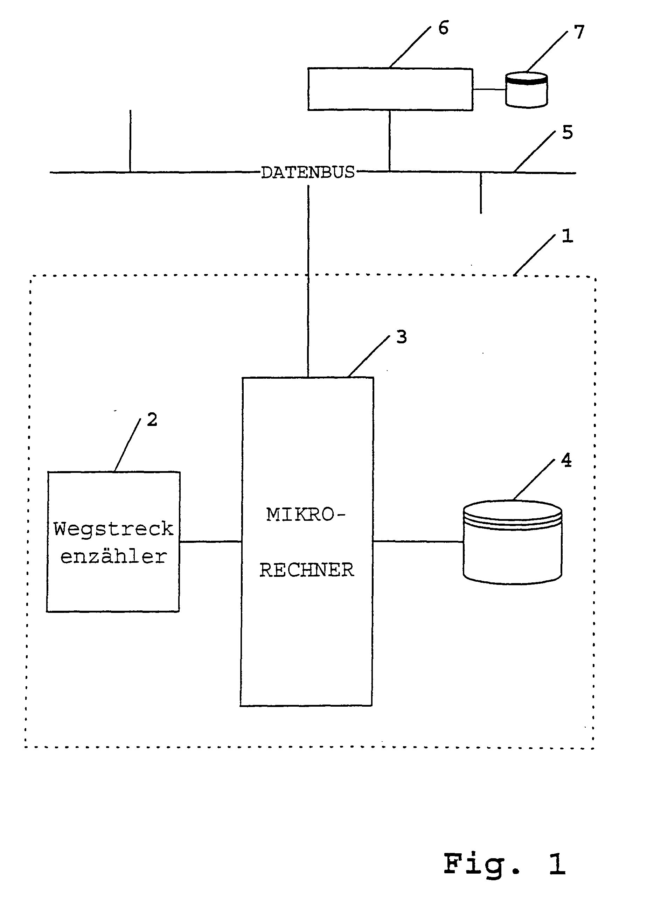

- Fig. 1: eine Vorrichtung zur Durchführung des erfindungsgemäßen Verfahrens.

In Fig. 1 ist schematisch ein Datenbus 5 eines Fahrzeugs dargestellt, an dem ein primäres Steuergerät 1 und ein weiteres Steuergerät 6 zur Durchführung des erfindungsgemäßen Verfahrens angebunden sind. Das primäre Steuergerät 1 ist im Fahrzeug direkt mit dem Kombiintstrument zur Anzeige und Messung des Kilometerstandes verbunden, während das weitere Steuergerät 6 als eigenständiges Steuergerät realisiert ist.

Das primäre Steuergerät 1 ist mit einem Wegstreckenzähler 2, einem Mikrorechner 3 und einem nichtflüchtigen Speichermittel 4 elektrisch leitend verbunden. Das Steuergerät 1 erhält die aktuelle Wegstreckenmessung durch den Wegstreckenzähler 2. Anhand des Mikrorechners 3 wird die ermittelte Wegstrecke zu den im Speichermittel 4 abgelegten Kilometerstandsdaten aufsummiert, abgespeichert und in bestimmten Zeitabschnitten auf den Datenbus 5 gesendet. Beim Senden eines Kilometerstandes wird der Botschaftszähler für das Senden des Kilometerstandes immer um eins erhöht und im Speichermittel 4 abgelegt. Im Speichermittel 4 ist ebenfalls das Codewort abgelegt, der hier durch eine vom Hersteller vergebene, vier Byte lange, eindeutige Nummer realisiert ist.

In dem Ausführungsbeispiel ist das Datenbussystem ein CAN-Bus, wobei aber das Verfahren mit jedem anderen Bussystem wie MOST, FlexRay anwendbar ist. In dem CAN-Protokoll ist festgelegt, dass eine Botschaft prinzipiell folgendermaßen aufgebaut ist: "Start der Botschaft" bezeichnet den Anfang der Botschaft, "Botschaftskennzeichnung" enthält den Identifier zur Unterscheidung der Botschaften, das "Kontrollfeld" enthält den Code für die Anzahl der Datenbytes im "Datenfeld", das "Datenfeld" enthält die zu übertragenden Daten, das "CRC-Feld" enthält ein Rahmensicherungswort zur Erkennung von Übertragungsstörungen, "Empfangsbestätigung" enthält ein Bestätigungssignal aller Empfänger, die die Botschaft fehlerfrei empfangen haben und "Ende der Botschaft" markiert das Ende der Botschaft.

Das vom Mikrorechner 3 auf den Datenbus gesendete "Datenfeld" der Länge acht Byte enthält, in genau dieser Reihenfolge, das Codewort des Fahrzeugs der Länge 4 Byte, den Botschaftszähler der Länge 1 Byte und den eigentlichen Kilometerstand der Länge 3 Byte.

Die vom primären Steuergerät 1 gesendeten Kilometerstandsdaten werden von einem weiteren Steuergerät 6 ausgewertet. Das weitere Steuergerät 6 verfügt ebenfalls über einen nichtflüchtigen Speicher 7, in dem dessen aktueller Kilometerstand und dessen Botschaftszähler sowie der Identifizierungscode des Fahrzeugs abgelegt sind.

Die Speichermittel 4 und 7 sind als nichtflüchtige Speichermittel realisiert, da auch nach Abschalten und erneutem Starten des Fahrzeugs sichergestellt werden muss, dass die aktuellen Kilometerstandsdaten zur Verfügung stehen.

Sind die gesendeten Kilometerstandsdaten des primären Steuergeräts 1 höher als die im Speichermittel 7 des Steuergeräts 6 abgelegten Kilometerstandsdaten, führt das Steuergerät 6 eine Überprüfung des in der Botschaft vom Datenbus enthaltenen "Datenfeldes" durch. Das "Datenfeld" enthält wie oben angeführt das Codewort, den Botschaftszähler und den eigentlichen Kilometerstand. Zuerst wird das Codewort der gesendeten Botschaft mit dem auf dem Speichermittel 7 des Steuergeräts 6 abgelegten Wert verglichen. Bei Übereinstimmung wird die Wegstreckendifferenz der in drei aufeinanderfolgenden Zeitabschnitten gesendeten Kilometerstände gebildet. Ist diese Wegstreckendifferenz nicht größer als eine für das Fahrzeug charakteristische Wegstrecke und ist der Botschaftszähler bei den betrachteten Kilometerstandsdaten korrekt hochgezählt worden, wird der höhere Kilometerstand als aktueller Kilometerstand vom weiteren Steuergerät 6 übernommen. Das Steuergerät 6 legt dies im nichtflüchtigen Speichermittel ab und nimmt dies als Wert für den weiteren Zählvorgang.

Der Botschaftszähler kann auch als umlaufender Zähler mit begrenztem Zählbereich ausgebildet sein, dessen Zählung bei einem Überlauf wieder bei Null beginnt. Hervorzuheben ist, dass durch den Botschaftszähler Fehler im sendenden Steuergerät erkannt werden.

Das weitere Steuergerät 6 sendet in bestimmten Zeitabschnitten seine aktuell abgespeicherten Kilometerstandsdaten in demselben Format, also mit Codewort, aktualisierten Botschaftszähler und seinem aktuellem Kilometerstand, auf den Datenbus.

Das primäre Steuergerät 1 wertet die gesendeten Kilometerstandsdaten mittels derselben Verfahrensschritte wie das weitere Steuergerät 6 aus. Ist der vom weiteren Steuergerät 6 gesendete Kilometerstand höher als der vom primären Steuergerät 1 und sind die bereits oben beschriebenen Bedingungen erfüllt, ist der Kilometerstand am primären Steuergerät 1 manipuliert worden oder das primäre Steuergerät hat einen technischen Defekt. Dann übernimmt das primäre Steuergerät 1 den Kilometerstand des weiteren Steuergeräts 6, als Ausgangswert für die weitere Kilometerstandsbestimmung.

## Patentansprüche

1. Verfahren zum Speichern von Kilometerstandsdaten in einem Verkehrsmittel mit über einen Datenbus (5) verbundenen Steuergeräten (1, 6), wobei die mittels eines Wegstreckenzählers (2) aktuell ermittelten Kilometerstandsdaten in einem Speichermittel (4) eines ersten Steuergeräts (1) abgespeichert werden
**dadurch gekennzeichnet, dass**
- die aktuellen Kilometerstandsdaten von mindestens einem weiteren Steuergerät (6) auf dem Datenbus (5) in einem Speichermittel (7) abgespeichert werden,
- die Steuergeräte (1, 6) die aktuell abgespeicherten Kilometerstandsdaten in bestimmten Zeitintervallen auf den Datenbus (5) senden und
- dass ein Steuergerät (1, 6) den auf den Datenbus (5) gesendeten Kilometerstand übernimmt, wenn dieser betragsmäßig höher, bezogen auf seinen abgespeicherten Wert ist und dieser für die weitere Zählung sowie Speicherung in diesem Steuergerät (1, 6) verwendet wird.

2. Verfahren nach Anspruch 1,
**dadurch gekennzeichnet, dass**
vor der Übernahme der Kilometerstandsdaten durch ein Steuergerät (1, 6) eine Prüfung auf Fehler der auf dem Datenbus (5) übertragenen Kilometerstandsdaten durchgeführt wird.

3. Verfahren nach Anspruch 1 oder 2,
**dadurch gekennzeichnet, dass**
die Übernahme des auf dem Datenbus (5) gesendeten Kilometerstandes nur erfolgt, wenn die Differenz der in mehreren aufeinanderfolgenden Zeitabschnitten gesendeten Kilometerstände eine für das Fahrzeug charakteristische Weglänge nicht überschreitet.

4. Verfahren nach Anspruch 1,
**dadurch gekennzeichnet, dass**
die Kilometerstandsdaten beim Versenden von einem Steuergerät (1, 6) mit einem für das Fahrzeug eindeutigen Codewort ergänzt werden, um sicherzustellen, dass die Botschaft von einem fahrzeuginternen Steuergerät (1, 6) gesandt wurde.

5. Verfahren nach Anspruch 1,
**dadurch gekennzeichnet, dass**
die Kilometerstandsdaten beim Versenden von einem Steuergerät (1, 6) mit einem Botschaftszähler ergänzt werden, dessen Betrag ein Zähler für die Anzahl der gesendeten Kilometerstandsdaten des Steuergeräts (1, 6) ist.

6. Verfahren nach Anspruch 2 und 4,
**dadurch gekennzeichnet, dass**
die Übernahme des auf dem Datenbus (5) gesendeten Kilometerstandes nur erfolgt, wenn das Codewort des gesendeten Kilometerstandes mit dem Codewort des Fahrzeugs identisch ist.

7. Verfahren nach Anspruch 2 und 5,
**dadurch gekennzeichnet, dass**
die Übernahme des auf dem Datenbus (5) gesendeten Kilometerstandes nur erfolgt, wenn der Botschaftszähler des gesendeten Kilometerstandes über mehrere aufeinanderfolgende Zeitabschnitte hinweg korrekt hochgezählt wird.
